Europäisches Patentamt

European Patent Office

Office européen des brevets

(11) Veröffentlichungsnummer: **0 186 790**
**A2**

(12) **EUROPÄISCHE PATENTANMELDUNG**

(21) Anmeldenummer: 85115149.8

(22) Anmeldetag: 29.11.85

(51) Int. Cl.⁴: **C08F 210/02** ,
//C08L77/00,(C08F210/02,220:1-2,222:04)

(30) Priorität: 04.12.84 DE 3444096

(43) Veröffentlichungstag der Anmeldung:
09.07.86 Patentblatt 86/28

(84) Benannte Vertragsstaaten:
AT BE CH DE FR GB IT LI NL

(71) Anmelder: BASF Aktiengesellschaft
Carl-Bosch-Strasse 38
D-6700 Ludwigshafen(DE)

(72) Erfinder: Reimann, Horst, Dr.
Adelheidstrasse 26
D-6520 Worms 1(DE)
Erfinder: Ziegler, Walter, Dr.
Starenweg 15
D-6803 Edingen-Neckarhausen(DE)
Erfinder: Brandstetter, Franz, Dr.
Ritterbueschel 45
D-6730 Neustadt(DE)
Erfinder: Theysohn, Rainer, Dr.
Am Bruch 38
D-6710 Frankenthal(DE)

(54) Copolymerisate des Ethylens und deren Verwendung als Schlagzähmodifier in Thermoplasten.

(57) Die Erfindung betrifft Copolymerisate des Ethylens, die auf 100 Mol Ethylen (a) 8,5 bis 16,3, insbesondere 9,2 bis 13,7 Mol eines $C_1$ bis $C_8$-Acrylsäurealkylesters und (b) 0,004 bis 0,32, insbesondere 0,02 bis 0,31 Mol eines cyclischen Carbonsäureanhydrids, insbesondere Maleinsäureanhydrid einpolymerisiert enthalten, sowie deren Verwendung in Mischung mit anderen Thermoplasten, insbesondere Poly(amiden) zur Verbesserung der Schlagzähigkeit.

EP 0 186 790 A2

Copolymerisate des Ethylens und deren Verwendung als Schlagzähmodifier in Thermoplasten

Die Erfindung betrifft Copolymerisate des Ethylens, die auf 100 Mol Ethylen (a) 8,5 bis 16,3, bevorzugt 9,2 bis 13,7 Mol eines $C_1$- bis $C_8$-(Meth)acrylsäurealkylesters und (b) 0,004 bis 0,32, bevorzugt 0,02 bis 0,31 Mol eines cyclischen ethylenisch ungesättigten Carbonsäureanhydrids einpolymerisiert enthalten sowie die Verwendung der Copolymerisate in Mischung mit anderen Thermoplasten, bevorzugt Poly(amiden) zur Verbesserung der Schlagzähigkeit.

Copolymerisate des Ethylens mit Alkylestern der (Meth)acrylsäure sind aus der GB-A-870480 bekannt. Des weiteren kennt man Copolymerisate des Ethylens mit $C_1$- bis $C_8$-(Meth)acrylsäurealkylestern und anderen mit Ethylen copolymerisierbaren Monomeren aus der EP-A1-106999. Letztere werden beispielsweise als Zusatz zu Thermoplasten empfohlen. Weiterhin sind in der DE-C-3220380 Schlagzähpolyamid-Formmassen beschrieben, die ein ternäres Copolymerisat aus Ethylen, $C_2$- bis $C_8$-Alkylester der (Meth)acrylsäure und eines säurefunktionellen oder latentsäurefunktionellen Monomeren enthalten.

Wird im letzten Fall Maleinsäureanhydrid als latente säuretragende Funktion in den dort genannten Mengen verwendet, so erhält man, wenn man dieses Produkt in Polyamid einsetzt, einen starken Molekulargewichtsaufbau. Die Fließeigenschaften beim Spritzguß werden drastisch verschlechtert. Setzt man die anderen in den obigen Schriften erwähnten Ethylencopolymerisate zu Polyamid, so gelangt man zu Produkten, die ebenfalls beim Verarbeiten einen Viskositätsaufbau zeigen oder eine störende, hohe Haftung beispielsweise noch zu Metall aufweisen.

Der Erfindung lag daher die Aufgabe zugrunde, Ethylen-(Meth)acrylsäureester-Copolymerisate zu schaffen, die im Polyamid nicht oder nur wenig zu einem Viskositätsaufbau führen und eine geringe Haftung zu beispielsweise Metallen aufweisen.

Diese Aufgabe wird erfindungsgemäß durch Copolymerisate gemäß Ansprüchen 1 bis 3 gelöst.

Die Herstellung der Ethylen-(Meth)acrylsäurealkylester-Carbonsäureanhydrid-Copolymerisate kann nach herkömmlichen üblichen Hochdruckpolymerisationsverfahren erfolgen [vgl. Ullmanns Enzyklopädie der Technischen Chemie, 4. Auflage, Band 19 (1980), Seiten 169 - 175, Verlag Chemie GmbH, D-6940 Weinheim, sowie EP-A1-106999]. Die Copolymerisation des Ethylens mit dem Ester der Acrylsäure oder Methacrylsäure und dem mit Ethylen copolymerisierbaren olefinisch ungesättigten cyclischen Carbonsäureanhydrid erfolgt im besonderen bei Drücken von 1800 bis 2700 bar und Temperaturen zwischen 150 und 350°C in Gegenwart radikalischer Initiatoren.

Handelt es sich bei den mit Ethylen copolymerisierbaren olefinisch ungesättigten cyclischen Carbonsäureanhydriden um bei Raumtemperatur feste Verbindungen, so werden diese bevorzugt in den Estern der (Meth)acrylsäure gelöst und so dem Reaktionsgemisch zugeführt. Man kann aber auch in diesem Fall das mit Ethylen copolymerisierbare cyclische Anhydrid in einem inerten Lösungsmittel lösen. Bevorzugt werden aber Lösungen mit den Estern der Acrylsäure eingesetzt.

Als Ester der (Meth)acrylsäure kommen Ester von Alkoholen mit $C_1$- bis $C_8$-Kohlenstoffatomen in Frage. Besonders geeignet sind die Ester der Acrylsäure mit n-Butanol bzw. Ethylhexanol. Es können aber auch Mischungen aus verschiedenen Estern der Acrylsäure verwendet werden.

Als mit Ethylen und dem (Meth)acrylsäureester copolymerisierbare olefinisch ungesättigte cyclische Carbonsäureanhydride (b) kommen insbesondere in Frage: Itaconsäureanhydrid, Citaconsäureanhydrid und/oder Maleinsäureanhydrid. Ganz besonders ist Maleinsäureanhydrid geeignet.

Die Copolymerisate des Ethylens enthalten somit einpolymerisiert auf 100 Mol Ethylen, 8,5 bis 16,3 Mol, vorzugsweise 9,2 bis 13,7 Mol Ester der (Meth)acrylsäure und 0,004 bis 0,32, vorzugsweise 0,02 bis 0,31, ganz besonders 0,04 bis 0,27 Mol des mit Ethylen copolymerisierbaren, ethylenisch ungesättigten cyclischen Carbonsäureanhydrids. Die Copolymerisate des Ethylens haben Schmelzindices von weniger als 150 g/10', vorzugsweise im Bereich von 6 bis 60 g/10', besonders aber im Bereich von 8 bis 20 g/10', gemessen nach DIN 53 735 bei 190°C und 2,16 kp.

Die Thermoplaste in denen die Ethylencopolymerisate als Schlagzähmodifier verwendet werden können, umfassen insbesondere technische Kunststoffe wie Polyamide, Polyester, Polyoximethylene und Polycarbonat. Besonders bevorzugt sind Polyamide. Die schlagzähen Mischungen enthalten im allgemeinen

(A) einen Thermoplasten und

(B) 5 bis 65 Gew.-%, bezogen auf (A) an Ethylencopolymerisat und

(C) gegebenenfalls übliche Zusatzstoffe in wirksamen Mengen.

Bevorzugt enthalten schlagzäh ausgerüstete Thermoplaste 8 bis 25 Gew.-% der Ethylencopolymerisate.

Die Poly(amide), kurz Polyamide, sind an sich bekannt und umfassen die halbkristallinen und amorphen Harze mit Molekulargewichten von mindestens 5000.

Solche Polyamide sind in den US-Patenten 2071250, 2071251, 2130523, 2130948, 2241322, 2312966, 2512606 und 3393210 beschrieben, sie können durch Kondensation äquimolekularer Mengen einer gesättigten Dicarbonsäure mit 4 bis 12 Kohlenstoffatomen, mit einem Diamin, welches 4 bis 14 Kohlenstoffatome aufweist, hergestellt werden. Beispiele für geeignete Polyamide sind Polyhexamethylenadipinsäureamid, Polyhexamethylenazelainsäureamid, Polyhexamethylensebacinsäureamid, Polyhexamethylendodecandisäureamid, Polycaprolactam, Polylaurinlactam, Poly-11-aminoundecansäure und Bis-(p-aminocyclohexyl)-methandodecandisäureamid. Es ist auch möglich, Polyamide zu verwenden, die durch binäre oder ternäre Copolymerisation hergestellt worden sind. Vorzugsweise sind die Polyamide linear und haben Schmelzpunkte von mehr als 200°C.

Bevorzugte Polyamide sind Polyhexamethylenadipinsäureamid und Polycaprolactam. Die Polyamide weisen im allgemeinen eine relative Viskosität von 2,5 bis 5 auf, bestimmt an einer 1 gew.-%igen Lösung in $H_2SO_4$ bei 23°C. Polyamide mit einer relativen Viskosität von 3 bis 3,5, insbesondere 3,1 bis 3,4, werden bevorzugt verwendet.

Die zu verwendenden Massen können durch übliche Zusatzstoffe, wie Stabilisatoren und Oxidationsverzögerer, Mittel gegen Wärmezersetzung und Zersetzung durch ultraviolettes Licht, Gleit- und Entformungsmittel, Färbemittel,

wie Farbstoffe und Pigmente, faser- und pulverförmige Füll- und Verstärkungsmittel, Keimbildungsmittel, Weichmacher usw. modifiziert werden, die in üblichen Mengen eingesetzt werden.

Die Mischungen werden üblicherweise durch Schmelzmischen des Polyamids mit dem Ethylencopolymerisat und den übrigen Komponenten zu einem gleichmäßigen Gemisch in einem Mehrfachschneckenextruder, wie einem Werner & Pfleiderer-Zweiwellenextruder oder anderen herkömmlichen Plastifizierungsvorrichtungen, wie einer Brabender-Mühle, einer Banbury-Mühle oder dgl. hergestellt. Die Gemische können aber auch durch gemeinsames Ausfällen aus Lösung oder durch Mischen oder Trockenmischen der Komponenten und anschließendes Schmelzstrangpressen des trockenen Gemisches hergestellt werden. Bedingt durch den intensiven Mischvorgang liegt das Ethylencopolymerisat im Polyamid in Form von Einzelteilchen verteilt vor, welche im allgemeinen eine Größe von unter 3 µm, bevorzugt unter 1 µm aufweisen.

Die erhaltenen Formmassen sind für die Spritzgieß- und Extrusionsverarbeitung geeignet, zur Herstellung von hochbeanspruchbaren, thermostabilen, schlagzähen Formteilen für technische Zwecke aller Art.

Beispiele 1 bis 5

100 Gew.-Teile eines Polyamid 6 mit der relativen Viskosität von 3,3, gemesssen an einer 1 gew.-%igen Lösung in konzentrierter Schwefelsäure bei 23°C, und 25 Gew.-Teile der in der Tabelle aufgeführten Ethylenterpolymerisate wurden über zwei getrennte Bandwagen der Einfüllöffnung eines Zweiwellenextruders zugeführt und bei 150 Upm und 280°C verknetet und in ein Wasserbad extrudiert. Nach Granulierung und Trocknung wurde die Mischung auf eine Spritzgußmaschine zu Prüfkörpers verspritzt und diese im trockenem Zustand geprüft. Die Werte der Kerbschlagzähigkeit nach DIN 53 453 zeigen, daß auch mit der geringen Mengen an einpolymerisiertem cyclischen Anhydrid hohe Zähigkeiten erreicht werden, die relative Viskosität aber nicht soweit ansteigt, daß die Verarbeitung erschwert wird.

Die relativen Viskositäten der Mischung wurden bestimmt wie oben beschrieben, wobei die 1 gew.-%ige Lösung in Schwefelsäure auf den Polyamidanteil bezogen wurde.

Beispiele 6 und 7

Die Mischungen 6 und 7 wurde analog wie in den Beispielen 1 bis 5 beschrieben hergestellt. Als Polyamid wurde ein Polyamid 6 mit der relativen Viskosität 2,5 eingesetzt.

Im Vergleichsbeispiel 6 wurde ein Ethylenterpolymerisat aus Ethylen-t-Butylacrylat-Acrylsäure verwendet, im erfindungsgemäßen Beispiel 7 das Ethylenn-Butylacrylat-Maleinsäureanhydrid-Terpolymerisat wie in Beispiel 4. Als Maß für die Metallhaftung wurde das Eindrehmoment gemessen, das eine Standard-Metallschraube von 6 mm Ø und 60 mm Länge dem Eindrehen in einen aus der Mischung spritzgegossenem Dübel entgegensetzt. Die erfindungsgemäße Mischung ergibt ein viel niedrigeres Eindrehmoment und erleichtert dadurch das Arbeiten mit einem solchen Dübel.

Tabelle 1

Eigenschaften von Mischungen aus Polyamid 6 (rel. Viskosität = 33) und Ethylenterpolymerisaten

| Beispiel | Gew.-Teile Polyamid | Terpolymerisat E-nBA-MSA (Mol : Mol : Mol) | | | Gew.-Teile Terpolymerisat | rel. Viskosität der Mischung | Kerbschlagzähigkeit [kJ/m$^2$]) (DIN 53 453) | | |
|---|---|---|---|---|---|---|---|---|---|
| | | | | | | | 23°C | -20°C | -40°C |
| 1 [+] | 100 | 100 | 10 | 0.34 | 25 | 4,1 | 40,7 | 11.0 | -11 |
| 2 [++] | 100 | 100 | 11,6 | 0.66 | 25 | 4,7 | 40,8 | 13.8 | -13 |
| 3 [++] | 100 | 100 | 12,5 | 1,2 | 25 | - | nicht granulierbar | | |
| 4 | 100 | 100 | 10,3 | 0.09 | 25 | 3,4 | 40,6 | 16.2 | -11 |
| 5 | 100 | 100 | 11,2 | 0.28 | 25 | 3,6 | 31,8 | 14.6 | - 9 |

+) ++) nicht erfindungsgemäß
+) Beispiel 22 aus DE 31 20 380

E = Ethylen

nBa = n-Butylacrylat

MSA = Maleinsäureanhydrid

Tabelle 2

| Beispiel | Gew.-Teile Polyamid | Terpolymerisat E-nBA-MSA (Mol : Mol : Mol) | | | Gew.-Teile Terpolymerisat | rel. Viskosität der Mischung | Eindrehmoment [Nm] |
|---|---|---|---|---|---|---|---|
| 6 [+] | 100 | 100 | 1,7 | 1,7 | 8,7 | 2,5 | 4,7 |
| 7 | 100 | 100 | 10,3 | 0.09 | 8,7 | 2,5 | 3,8 |

0 186 790

## Ansprüche

1. Copolymerisate des Ethylens, die auf 100 Mol Ethylen (a) 8,5 bis 16,3 Mol eines $C_1$- bis $C_1$-(Meth)acrylsäurealkylesters und (b) 0,004 bis 0,32 Mol eines cyclischen, ethylenisch ungesättigten Carbonsäureanhydrids einpolymerisiert enthalten.

2. Copolymerisate nach Anspruch 1, dadurch gekennzeichnet, daß sie 9,2 bis 13,7 Mol (a) und 0,02 bis 0,31 Mol (b) einpolymerisiert enthalten.

3. Copolymerisate nach Anspruch 1, dadurch gekennzeichnet, daß (b) Maleinsäureanhyrid ist.

4. Verwendung der Copolymerisate nach Anspruch 1, in Mischung mit anderen Thermoplasten zur Verbesserung der Schlagzähigkeit.

5. Verwendung der Copolymerisate nach Ansprüchen 1 und 4 in Mischung mit Poly(amiden).